(19) Europäisches Patentamt
European Patent Office
Office européen des brevets

(11) **EP 0 677 263 B1**

(12) **EUROPÄISCHE PATENTSCHRIFT**

(45) Veröffentlichungstag und Bekanntmachung des Hinweises auf die Patenterteilung:
**13.08.1997 Patentblatt 1997/33**

(51) Int. Cl.$^6$: **A47J 27/022**

(21) Anmeldenummer: **95103295.2**

(22) Anmeldetag: **08.03.1995**

(54) **Gar- und/oder Kochgerät, welches für eine bodenseitige Zuführung von Wärmeenergie durch Wärmeleitung oder durch elektromagnetische Induktion eingerichtet ist**

Cooking vessel suited for feeding heat to the bottom by thermal conduction or electromagnetic induction

Appareil de cuisson dont le fond peut être chauffé par conduction de chaleur ou par induction électromagnétique

(84) Benannte Vertragsstaaten:
**AT BE CH DE DK ES FR GR IT LI LU**

(30) Priorität: **15.04.1994 DE 4412943**

(43) Veröffentlichungstag der Anmeldung:
**18.10.1995 Patentblatt 1995/42**

(73) Patentinhaber: **FISSLER GMBH**
**D-55743 Idar-Oberstein (DE)**

(72) Erfinder:
• **Crummenauer, Michael, Dipl.-Ing.**
**D-55758 Oberwörresbach (DE)**

• **Dietrich, Uwe, Dipl.-Ing.**
**D-55767 Schwollen (DE)**
• **Galle, Alfred**
**D-55745 Idar-Oberstein (DE)**

(74) Vertreter: **Honke, Manfred, Dr.-Ing. et al**
**Patentanwälte**
**Andrejewski, Honke & Partner,**
**Postfach 10 02 54**
**45002 Essen (DE)**

(56) Entgegenhaltungen:
EP-A- 0 268 186          WO-A-91/15142
CH-A- 218 335          DE-A- 3 716 966
DE-A- 4 015 442

## Beschreibung

Die Erfindung betrifft ein Gar- und/oder Kochgerät, welches für eine bodenseitige Zuführung von Wärmeenergie durch Wärmeleitung oder durch elektromagnetische Induktion eingerichtet ist, mit einem im Grundriß runden Aufnahmebehälter aus austenitischem Stahlblech mit Behältermantel und Behälterboden, einer unter dem Behälterboden flächig befestigten Wärmeverteilungsplatine vorgegebener Dicke aus einem gut wärmeleitendem Metall, einer ferromagnetischen Platinenabdeckung mit im Übergangsbereich zwischen Behälterboden und Behältermantel an dem Aufnahmebehälter anliegendem Abdeckungskragen aus Stahlblech, welche Platinenaodeckung an der Wärmeverteilungsplatine flächig befestigt ist, wobei die Platinenabdeckung Abdeckungsausnehmungen und eine von der Aufstellebene weg leicht konkave bis ebene Bodenkaltgeometrie aufweist. Eine in diesem Sinne leicht konkave Bodendurchbiegung bewirkt, daß das Gar- und/oder Kochgerät in diesem Zustand lediglich mit seinem Rand auf einer ebenen Unterlage, z. B. auf einer beheizten Ceranplatte, aufsteht. Die moderne Praxis verlangt, daß solche Gar- und/oder Kochgeräte sowohl für Induktionsherde als auch für übliche Elektro- oder Gasherde geeignet sind. Sie werden insoweit auch als Allherdgargeräte bzw. Allherdkochgeräte bezeichnet. Induktionsherde, für die solche Gar- und/oder Kochgeräte bestimmt sind arbeiten zumeist mit einer Frequenz im Bereich von $10^4$Hz z. B. mit $2,5 \times 10^4$Hz oder mehr, z. B. auf $4,5 \times 10^4$Hz. - Die erfindungsgemäßen Gar- und/oder Kochgeräte sind insbesondere für den Haushalt bestimmt und besitzen die dort üblichen Durchmesser.

Bei dem aus der Praxis bekannten Gar- und/oder Kochgerät von dem die Erfindung ausgeht, ist die Platinenaodeckung mit über die Bodenfläche verteilten Löchern und Schlitzen versehen. In diesen liegt der Werkstoff der Wärmeverteilungsplatine frei oder er füllt die Löcher und Schlitze, flächig eingepaßt in die Bodenfläche, bündig aus. Die Löcher und Schlitze stören im angegebenen Frequenzbereich die elektromagnetische Induktion kaum. Sie dienen dazu, für die Platinenabdeckung eine gegenüber der geschlossenem Platinenabdeckung modifizierte Wärmedehnung einzurichten. Insbesondere bei Zuführung der Wärmeenergie über Wärmeleitung soll eine störende Bombage nicht auftreten. Störende Bombage bezeichnet hier und im Rahmen der Erfindung eine auf Wärmedehnungen beruhende Verformung der Platinenabdeckung, welche die leicht konkave Bodenkaltgeometrie beseitig. Die Praxis zeigt, daß bei den bekannten Gar- und/oder Kochgeräten, je nach den vom Gar- und/oder Kochgut abhängigen Temperaturverhältnissen, eine störende Bombage auftritt. Das stört bei Zuführung der Wärmeenergie über Wärmeleitung: Der Boden der Platinenabdeckung wird zu einer ebenen Aufstellfläche hin, wenn auch nur geringfügig, konvex, er steht im Bereich seines Mittelpunktes auf der Aufstellfläche auf. Das Gar- und/oder Kochgerät wackelt auf der Heizfläche, z. B. auf der beheizten Ceranfläche. Eine besondere Abstimmung der Blechdicken sowie der Geometrie und Gestaltung der Platinenabdeckung ist bei den bekannten Gar- und/oder Kochgeräten nicht erkennbar.

Zur Vermeidung einer störenden Bombage bei Gar- und/oder Kochgeräten ohne Wärmeverteilungsplatine und Platinenabedeckung ist es bekannt (WO 91/15 142), in der Unterseite des einteiligen Behälterbodens im wesentlichen radial verlaufende Rillen ausreichender Tiefe vorzusehen, die zur Aufnahme und zum Ausgleich von unterschiedlichen Wärmedehnungen eingerichtet sind. Das läßt sich auf Gar- und/oder Kochgeräte des eingangs beschriebenen Aufbaus nicht übertragen, weil das Sandwichaggregat aus Behälterboden, Wärmeverteilungsplatine und Platinenabdeckung aus jeweils anderen Werkstoffen, die miteinander vereinigt sind, sich anders verhalten als ein einheitlicher Behälterboden aus Stahlblech oder dergleichen.

Der Erfindung liegt das technische Problem zugrunde, bei einem Gar- und/oder Kochgerät des eingangs beschriebenen Aufbaus und der eingangs beschriebenen Zweckbestimmung störende Bombagen vollständig zu unterdrücken und dadurch das Gar- und/oder Kochgerät, welches für den Einsatz mit Zuführung der Wärmeenergie durch elektromagnetische Induktion sehr gut geeignet ist, auch für den Einsatz mit Zuführung der Wärmeenergie über Wärmeleitung weitgehend zu optimieren.

Zur Lösung dieser Aufgabe ist Gegenstand der Erfindung ein Gar- und/oder Kochgerät des eingangs beschriebenen Aufbaus und der eingangs beschriebenen Zweckbestimmung mit der Kombination der folgenden Merkmale:

1.1) die Platinenabdeckung aus ferromagnetischem Blech besitzt Abdeckungsausnehmungen in Form von im wesentlichen radial verlaufenden Schlitzen,

1.2) die radialen Abdeckungsausnehmungen gehen von einem gemeinsamen Zentrum aus,

1.3) die radialen Abdeckungsausnehmungen besitzen eine Länge, die vor dem Abdeckungskragen endet,

wobei das Sandwichaggregat aus dem Behälterboden, der Wärmeverteilungsplatine und der Platinenabdeckung durch eine Abstimmung der Blechdicke des Behälterbodens und der Blechdicke der Platinenabdeckung einerseits, der Länge und der Breite der Abdeckungsausnehmungen sowie des Durchmessers des geschlossenen Zentrums andererseits ausreichend bombagestabil bei Zuführung der Wärmeenergie durch Wärmeleitung ausgebildet ist. - Das gemeinsame Zentrum kann durch den Kreuzungsbereich der radialen Schlitze gebildet sein, diese können aber auch vor dem Zentrum enden.

Die Erfindung geht von der Erkenntnis aus, daß bei einem erfindungsgemäßen Gar- und/oder Kochgerät des eingangs beschriebenen Aufbaus durch die Kombination der Merkmale 1.1), 1.2) und 1.3) bei vorgegebener Platinendicke die Voraussetzungen für eine Unterdrückung störender Bombagen durch Bauteilabstimmung gegeben sind. Die Unterdrückung der störenden Bombagen kann bei einem Gar- und/oder Kochgerät mit den Merkmalen 1.1), 1.2) und 1.3) allein durch Abstimmung der Blechdicken und der Geometrie sowie der Gestaltung der Platinenabdeckung in bezug auf die Anordnung, die Breite und Länge der Schlitze sowie in bezug auf den Durchmesser des Zentrums erreicht werden. Enden die radialen Schlitze vor dem Zentrum, so ist der Durchmesser des Zentrums zweckmäßigerweise möglichst klein. Die optimale Abstimmung kann für jeden Typ eines erfindungsgemäßen Gar- und/oder Kochgerätes leicht im Labor ermittelt werden. Die erfindungsgemäße Abstimmung berücksichtigt nach bevorzugter Ausführungsform den von der Frequenz der elektromagnetischen Induktion abhängigen Skineffekt. In diesem Zusammenhang wird die Blechdicke der Platinenabdeckung an die Eindringtiefe des elektromagnetischen Induktionsfeldes angepaßt, deren Stromdichte mit der Eindringtiefe exponentiell abfällt. Sie soll daher vorzugsweise nicht kleiner sein als 0,5 mm und nicht größer sein als 0,8 mm. Die Blechdicke des Behälters und damit des Behälterbodens ist dabei zur Vermeidung einer störenden Bombage zweckmäßigerweise dicker. - Das Merkmal bombagestabil bedeutet, daß infolge der erfindungsgemäßen Maßnahmen eine Bombage nicht stattfindet. Das Merkmal bombagestabil schließt nicht aus, daß der Radius der leicht konkaven Bodenkaltgeometrie bei der Erwärmung des erfindungsgemäßen Gar- und/oder Kochgerätes, insbesondere bei Erwärmung durch Wärmeleitung, kleiner, die Platinenabdeckung also konkaver wird. Aus Gründen des Wärmeübergangs wird man im Rahmen der erfindungsgemäßen Abstimmung dafür sorgen, daß diese Veränderung nicht zu groß wird.

Im einzelnen läßt sich das erfindungsgemäße Gar- und/oder Kochgerät auf verschiedene Weise weiter ausbilden und gestalten. So sind nach bevorzugter Ausführungsform der Erfindung die Bauteile des Sandwichaggregates durch intermetallische Verbindung flächig aneinander befestigt. Das erfolgt regelmäßig durch ein sogenanntes Preßschweißen. Die Bauteile des Sandwichaggregates können aber auch durch Lötverbindungen flächig aneinander befestigt sein.

Die Lehre der Erfindung kann mit den Werkstoffen verwirklicht werden, die für Gar- und/oder Kochgeräte des eingangs beschriebenen Aufbaus an sich bekannt und üblich sind. Das gilt insbesondere in bezug auf die Legierungszusammensetzungen. Der Behälterboden und damit der Aufnahmebehälter insgesamt besitzen nach bevorzugter Ausführungsform der Erfindung eine Blechdicke im Bereich von 0,6 bis 1,25 mm. Die Wärmeleitungsplatine besitzt zweckmäßigerweise eine Dicke im Bereich von 4 bis 8 mm, während die Platinenabdeckung (insbesondere wenn sie aus einer Aluminiumlegierung besteht) eine Dicke von 0,5 bis 0,8 mm aufweist, sie ist im Rahmen der oben erläuterten Abstimmungsregel dünner als die Blechdicke des Aufnahmebehälters. Vorzugsweise erfolgt die Abstimmung im Rahmen einer Regel, die dadurch gekennzeichnet ist. daß die ferromagnetische Platinenabdeckung eine Blechdicke ($d_{PL}$) aufweist, die unter Berücksichtigung der Frequenz der elektromagnetischen Induktion etwa der Eindringtiefe entspricht, bei der die induzierte Stromdichte auf etwa 37 % ihres Maximalwertes abgesunken ist (und etwa 86 % der gesamten induzierten Energie in Wärme umgewandelt wird, und daß der austenitische Behälterboden eine Blechdicke ($d_B$) aufweist, die der Gleichung $d_B = x d_{PL}$ genügt, x im Bereich 1,3 bis 2.

Bei dem erfindungsgemäßen Gar- und/oder Kochgerät können unterschiedliche Wärmedehnungen selbstverständlich nicht vermieden werden. Sie sind jedoch bei einem erfindungsgemäßen Gar- und/oder Kochgerät gleichsam festgehalten, so daß störende Bombagen nicht auftreten. In diesem Zusammenhang ist eine Ausführungsform der Erfindung, der besondere Bedeutung zukommt, dadurch gekennzeichnet, daß das Sandwichaggregat mit dem am Aufnahmebehälter anliegenden Abdeckungskragen gegenüber dem Aufnahmebehälter einen umlaufenden, im Vertikalschnitt zwickelförmigen Ringraum bildet, in den der Werkstoff der Wärmeverteilungsplatine eingeführt ist, und zwar intermetallisch oder durch Lötverbindung mit dem Abdeckungskragen und dem Aufnahmebehälter verbunden, wobei dieser Bereich des Sandwichaggregates unter Wärmedehnung elastisch verformbar eingerichtet ist und elastisch bei Abkühlung des Gar- und/oder Kochgerätes seine Ausgangslage wieder einnimmt.

Von besonderer Bedeutung ist bei dem erfindungsgemäßen Gar- und/oder Kochgerät auch das Zentrum der Platinenabdeckung. Es soll nicht zu groß sein und bildet ein Stabilisierungszentrum für die Geometrie des Sandwichaggregates und insbesondere der Platinenabdeckung. Der Durchmesser des Zentrums ist zweckmäßigerweise kleiner als 50 mm. Das Zentrum der Platinenabdeckung kann aus dem ferromagnetischen Blech der Platinenabdeckung geformt sein. Das Zentrum der Platinenabdeckung ist insoweit beim Ausstanzen der Schlitze in der Platinenabdeckung gleichsam stehengeblieben. Es besteht aber auch die Möglichkeit, das Zentrum der Platinenabdeckung als einen in eine Ausstanzung der Platinenabdeckung eingesetzten Zuschnitt aus austenitischem Stahl auszuführen, welcher zweckmäßig die gleiche Blechdicke aufweist wie die Platinenabdeckung. Dabei kann randseitig ein freier Spalt zwischen der Ausstanzung und dem Zuschnitt frei bleiben. Bei einer Ausführungsform eines erfindungsgemäßen Gar- und/oder Kochgerätes liegt in den Schlitzen und gegebenenfalls in dem vorgenannten Spalt der Platinenabdeckung der Werkstoff der Wärmeverteilungsplatine frei. Der Werkstoff der Platinenabdeckung kann aber auch in den Schlitzen bzw. dem Spalt und diese, bündig mit der Platinenabdeckung, ausfüllend angeordnet sein. Eine andere Ausführungsform ist dadurch gekennzeichnet, daß in den Schlitzen der Platinenabdeckung Zuschnitte aus austenitischem Blech eingelegt sind.

Gegenstand der Erfindung ist auch eine besondere Verwendung erfindungsgemäßer Gar- und/oder Kochgeräte. Diese besondere Verwendung ist Gegenstand des Patentanspruches 10, der deutlich macht, daß ein erfindungsgemäßes Gar- und/oder Kochgerät wie üblich eingesetzt werden kann, wenn die Wärmeenergie durch Wärmeleitung eingeführt wird. Gleichzeitig macht der Verwendungsanspruch 10 deutlich, daß eine optimale Erwärmung erreicht wird, wenn das erfindungsgemäße Gar- und/oder Kochgerät und die Induktionsspule für die Zuführung von Wärmeenergie durch elektromagnetische Induktion so einander zugeordnet sind, wie es in dem Merkmal 10.2) des Verwendungsanspruches 10 beschrieben ist.

Im folgenden wird die Erfindung anhand einer lediglich ein Ausführungsbeispiel darstellenden Zeichnung ausführlicher erläutert. Es zeigen in schematischer Darstellung

Fig. 1    einen Vertikalschnitt durch das Unterteil eines erfindungsgemäßgen Gar- und/oder Kochgerätes,

Fig. 2    den Gegenstand nach Fig. 1 mit übertrieben dargestellter konkaver Bodenkaltgeometrie der Platinenabdeckung,

Fig. 3    ein Gar- und/oder Kochgerät, bei dem die Lehre der Erfindung nicht verwirklicht ist, mit störender Bombage,

Fig. 4    im gegenüber den Fig. 1 bis 3 wesentlich vergrößertem Maßstab einen Ausschnitt A aus dem Gegenstand der Fig. 1,

Fig. 5, 6 und 7    Ansichten der Unterseite der Kapselabdeckung eines erfindungsgemäßen Gar- und/oder Kochgerätes, in verschiedenen Ausführungsformen und

Fig. 8    den Gegenstand nach Fig. 1 in Verbindung mit einer graphischen Darstellung über die Stromdichteverteilung in der Platinenabdeckung bei Zuführung von Wärmeenergie durch elektromagnetische Induktion bei einem erfindungsgemäßen Gar- und/oder Kochgerät.

Das in den Figuren dargestellte Gar- und/oder Kochgerät besitzt einen Durchmesser in dem Durchmesserbereich, der bei Gar- und/oder Kochgeräten für den Haushalt üblich ist. Das Gar- und/oder Kochgerät ist für eine bodenseitige Zuführung von Wärmeenergie durch Wärmeleitung oder durch Zuführung von Wärmeenergie durch elektromagnetische Induktion eingerichtet. Es ist also einerseits sowohl auf der Metallplatte oder auf einer Ceranplatte eines Herdes für elektrische Beheizung oder Gasbeheizung aufsetzbar oder andererseits auch auf einen Induktionsherd aufsetzbar. Die Frequenz eines Induktionsherdes liegt z. B. bei 25.000 Hz.

Zum grundsätzlichen Aufbau des Gar- und/oder Kochgerätes gehören ein im Grundriß runder Aufnahmebehälter 1 aus austenitischem Stahlblech für das Gar- und/oder Kochgut mit Behältermantel 2 und Behälterboden 3, eine unter dem Behälterboden 3 flächig befestigte Wärmeverteilungsplatine 4 vorgegebener Dicke aus einem gut wärmeleitenden Metall und eine ferromagnetische Platinenabdeckung 5 mit im Übergangsbereich zwischen Behälterboden 3 und Behältermantel 2 an dem Aufnahmebehälter 1 anliegenden Abdeckungskragen 6 aus Stahlblech mit zumindest weitgehend ferritischem Gefüge. Die Platinenabdeckung 5 ist an der Wärmeverteilungsplatine 4 flächig befestigt.

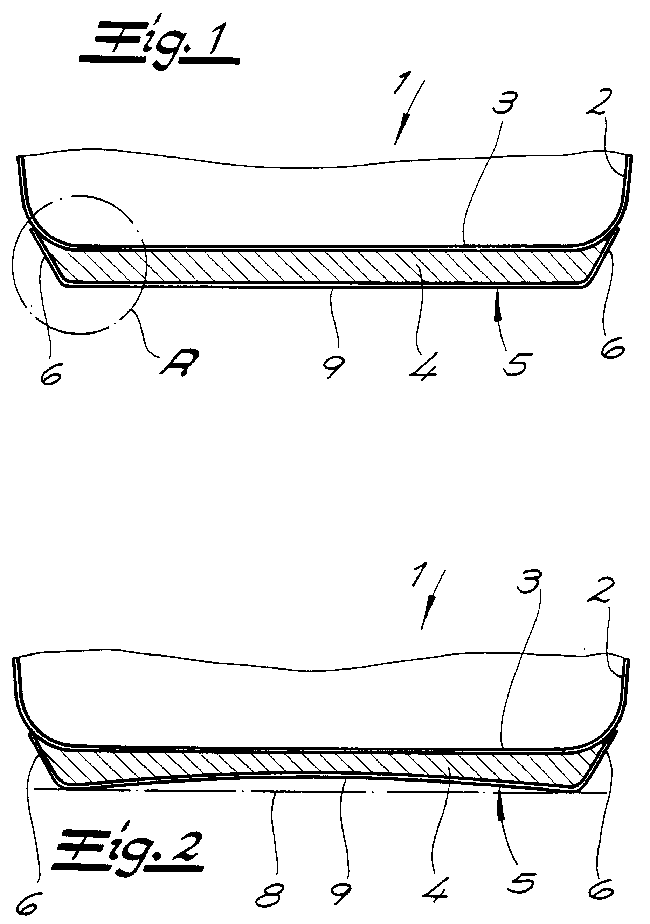

Die Platinenabdeckung 5 besitzt Abdeckungsausnehmungen 7. Das Gar- und/oder Kochgerät insgesamt ist im Ausführungsbeispiel so ausgelegt, daß die Platinenabdeckung 5 im kalten Zustand eine von einer Aufstellebene 8 weg leicht konkave Bodendurchbiegung 9 aufweist, die als Bodenkaltgeometrie bezeichnet wird. Diese ist in den Fig. 1 und insbesondere der Fig. 2 übertrieben dargestellt.

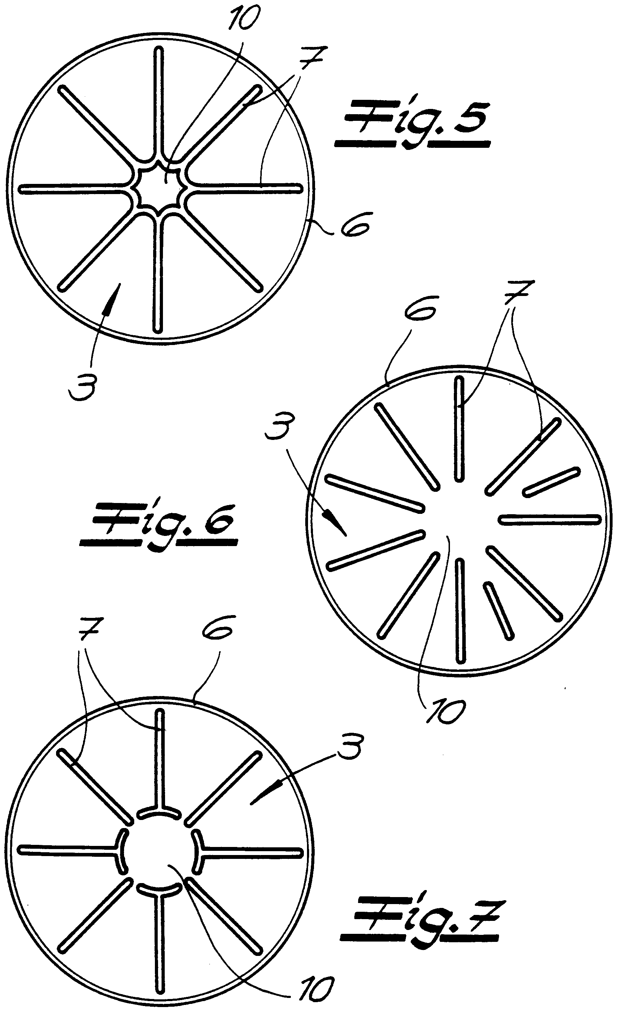

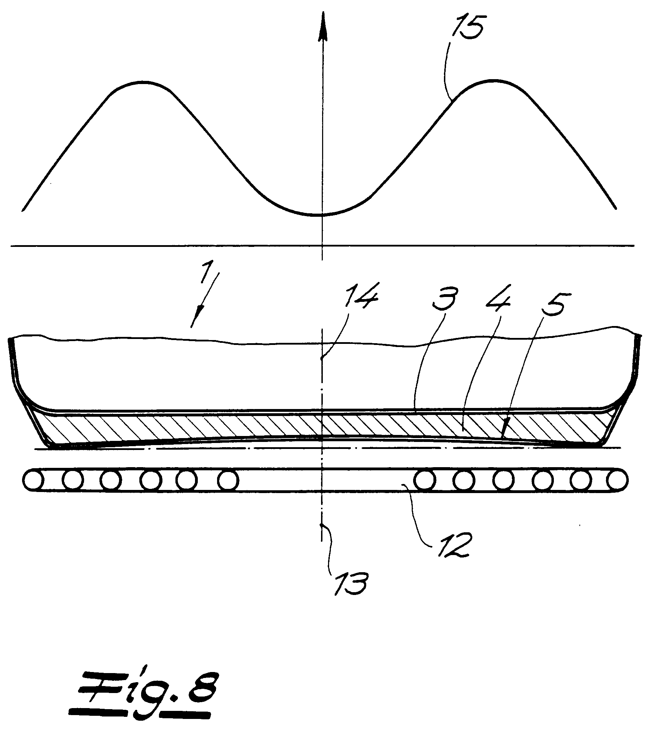

Die Platinenabdeckung 5 besteht aus einem ferromagnetischen Blech. Sie besitzt Abdeckungsausnehmungen 7 in Form von im wensentlichen radial verlaufenden Schlitzen. Die radialen Schlitze gehen von einem Zentrum 10 aus. Es kann kleiner sein als dargestellt. Die Abdeckungsausnehmungen 7 besitzen eine Länge, die vor dem Abdeckungskragen 6 endet. Insoweit wird insbesondere auf die Fig. 5, 6 und 7 verwiesen. Die Schlitze werden ausreichend breit gewählt.

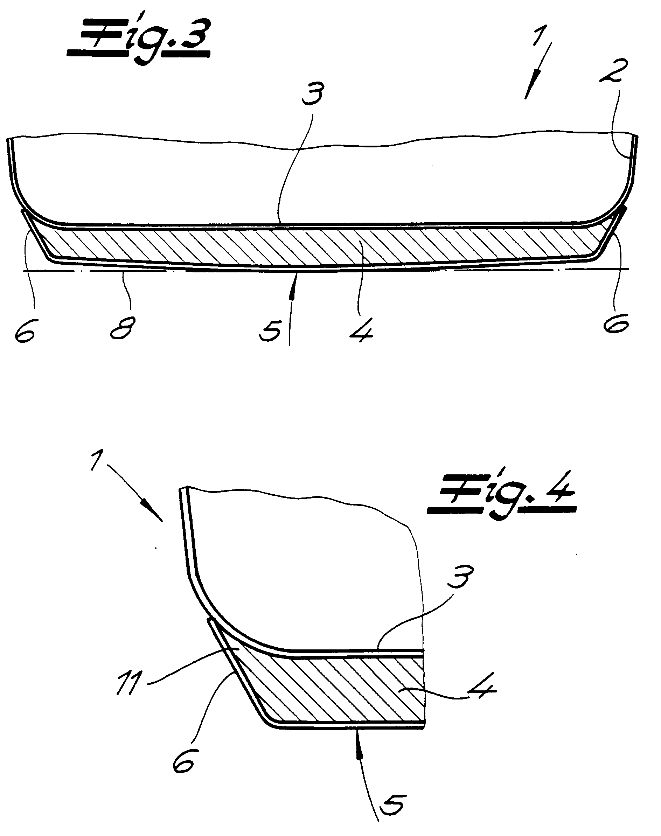

Bei dem erfindungsgemäßen Gar- und/oder Kochgerät bilden der Behälterboden 3, die Wärmeverteilungsplatine 4 und die Platinenabdeckung 5 ein Sandwichaggregat 3, 4, 5, in dem die Sandwichbauteile flächig miteinander, z. B. durch eine intermetallische Verbindung oder durch eine Lötverbindung, vereinigt sind. Das Sandwichaggregat 3, 4, 5, ist durch eine Abstimmung der Blechdicke des Behälterbodens 3 und der Blechdicke der Platinenabdeckung 5 einerseits, der Länge und der Breite der Abdeckungsausnehmungen 7 sowie des Durchmessers des Zentrums 10 andererseits ausreichend bombagestabil bei Zuführung der Wärmeenergie durch Wärmedehnung ausgebildet. Was unter Bombage in diesem Zusammenhang verstanden wird, erläutert die Fig. 3. Vergleicht man die Fig. 3 mit der Fig.

1, so erkennt man, daß sich die Platinenabdeckung 5 gleichsam konvex zur Aufstellebene 8 hin verformt hat. In Fig. 3 ist diese Verformung übertrieben dargestellt worden. Bei der Bombage, die in Fig. 3 dargestellt worden ist, wird auch der Wärmeübergang zwischen der Platinenabdeckung 5, der Wärmeverteilungsplatine 4 und damit dem Behälterboden 3 bei Verwendung des Gar- und/oder Kochaggregates bei Zuführung von Wärmeenergie durch Wärmeleitung beeinträchtigt. Die Zeichnungen sind nicht maßstäblich. Die Maße mögen so liegen, wie es dem Patentanspruch 4 entspricht. Die Bauteile des Sandwichaggregates 3, 4, 5, sind durch intermetallische Verbindungen flächig aneinander befestigt, man kann aber auch mit einer Lötverbindung arbeiten. In der Fig. 4 erkennt man, daß das Sandwichaggregat 3, 4, 5, mit dem am Aufnahmebehälter 1 anliegenden Abdeckungskragen 6 gegenüber dem Aufnahmebehälter 1 einen umlaufenden, im Vertikalschnitt zwickelförmigen Ringraum 11 bildet, in den der Werkstoff der Wärmeverteilungsplatine 4 eingeführt ist, wobei er durch eine intermetallische Verbindung oder durch eine Lötverbindung mit dem Abdeckungskragen 6 und dem Aufnahmebehälter 1 verbunden ist. Auf diese Weise entsteht an dem erfindungsgemäßen Gar- und/oder Kochaggregat ein Bereich des Sandwichaggregates 3, 4, 5, der bei Wärmedehnungen elastisch verformbar ist. Dieser Bereich wirkt wie eine einspannende Umreifung. Das Zentrum 10 der Platinenabdeckung 5 kann aus dem ferromagnetischen Blech der Platinenabdeckung 5 geformt sein. Das Zentrum 10 der Platinenabdeckung 5 kann aber auch aus einem in eine Ausstanzung der Platinenabdeckung eingesetzten Zuschnitt aus austenitischem Blech bestehen, welches die gleiche Blechdicke aufweist wie die Platinenabdeckung. In den Abdeckungsausnehmungen 7, zu denen auf die Fig. 5, 6 und 7 verwiesen wird, ist der Werkstoff der Wärmeverteilungsplatine 4 freiliegend angeordnet. Man könnte in die Abdeckungsausnehmungen 7 aber auch Zuschnitte aus austenitischem Blech einlegen.

Betrachtet man die Fig. 8. so erkennt man in der Fig. 8 zunächst das untere Teil eines erfindungsgemäßen Gar- und/oder Kochgerätes und darunter eine Induktionsspule 12, die im Ausführungsbeispiel als ebene Spirale ausgeführt ist. Diese Induktionsspule 12 hat eine Achse 13, zu der in der Fig. 8 die Achse 14 des auf die Aufstellfläche des entsprechend ausgebildeten Induktionsherdes aufgesetzten Gar- und/oder Kochgerätes koaxial verläuft. Dann bildet sich ein entsprechendes Induktionsfeld aus und die Energiedichte der induktiven Erwärmung in dem Sandwichbauteil 3, 4, 5, verteilt sich so, wie es in der Fig. 8 durch die Kurve 15 angedeutet ist. Die Ordinate entspricht einem diametralen Schnitt durch das erfindungsgemäße Gar- und/oder Kochgerät, die Abszissenachse enthält ein Maß für die Energiedichte.

## Patentansprüche

1. Gar- und/oder Kochgerät, welches für eine bodenseitige Zuführung von Wärmeenergie durch Wärmeleitung oder durch elektromagnetische Induktion eingerichtet ist, mit

    einem im Grundriß runden Aufnahmebehälter aus austenitischem Stahlblech für das Gar- und/oder Kochgut mit Behältermantel und Behälterboden,

    einer unter dem Behälterboden flächig befestigten Wärmeverteilungsplatine vorgegebener Dicke aus einem gut wärmeleitendem Metall,

    einer ferromagnetischen Platinenabdeckung mit im Übergangsbereich zwischen Behälterboden und Behältermantel an dem Aufnahmebehälter anliegendem Abdeckungskragen aus Stahlblech, welche Platinenabdeckung an der Wärmeverteilungsplatine flächig befestigt ist,

wobei die Platinenabdeckung Abdeckungsausnehmungen und eine von der Aufstellebene weg leicht konkave bis ebene Bodenkaltgeometrie aufweist, **gekennzeichnet durch** die Kombination der folgenden Merkmale:

    1.1) die Platinenabdeckung (5) aus ferromagnetischem Blech besitzt Abdeckungsausnehmungen (7) in Form von im wesentlichen radial verlaufenden Schlitzen,

    1.2) die radialen Abdeckungsausnehmungen (7) gehen von einem gemeinsamen Zentrum (10) aus,

    1.3) die radialen Abdeckungsausnehmungen (7) besitzen eine Länge, die vor dem Abdeckungskragen (6) endet,

wobei das Sandwichaggregat (3, 4, 5,) aus dem Behälterboden (3), der Wärmeverteilungsplatine (4) und der Platinenabdeckung (5) durch eine Abstimmung der Blechdicke des Behälterbodens (3) und der Blechdicke der Platinenabdeckung (5) einerseits, der Länge und der Breite der Abdeckungsausnehmungen (7) sowie des Durchmessers des Zentrums (10) andererseits ausreichend bombagestabil bei Zuführung der Wärmeenergie durch Wärmeleitung ausgebildet sind.

2. Gar- und/oder Kochgerät nach Anspruch 1, dadurch gekennzeichnet, daß die Bauteile des Sandwichaggregates (3, 4, 5) durch intermetallische Verbindungen flächig aneinander befestigt sind.

3. Gar- und/oder Kochgerät nach Anspruch 1, dadurch gekennzeichnet, daß die Bauteile des Sandwichaggregates (3, 4, 5) durch Lötverbindungen flächig aneinander befestigt sind.

4. Gar- und/oder Kochgerät nach einem der Ansprüche 1 bis 3, dadurch gekennzeichnet, daß der Behälterboden (3) und damit der Aufnahmebehälter (1) insgesamt eine Blechdicke im Bereich von 0,6 bis 1,25 mm, die Wärmeverteilungsplatine (4) eine Dicke im Bereich von 4 bis 8 mm und die Platinenabdeckung (5) eine Blechdicke im Bereich von 0,5 bis 0,8 mm aufweisen.

5. Gar- und/oder Kochgerät nach einem der Ansprüche 1 bis 4, dadurch gekennzeichnet, daß das Sandwichaggregat (3, 4, 5) mit dem am Aufnahmebehälter (1) anliegenden Aodeckungskragen (6) gegenüber dem Aufnahmebehälter (1) einen umlaufenden, im Vertikalschnitt zwickelförmigen Ringraum (11) bildet, in den der Werkstoff der Wärmeverteilungsplatine (4) eingeführt ist, und zwar intermetallisch oder durch Lötverbindung mit dem Abdeckungskragen (6) und dem Aufnahmebehälter (1) verbunden, und daß dieser Bereich des Sandwichaggregates (3, 4, 5) unter Wärmedehnung elastisch verformbar eingerichtet ist.

6. Gar- und/oder Kochgerät nach einem der Ansprüche 1 bis 5, dadurch gekennzeichnet, daß das Zentrum (10) der Platinenabdeckung (5) aus dem ferromagnetischen Blech der Platinenabdeckung (5) geformt ist.

7. Gar- und/oder Kochgerät nach einem der Ansprüche 1 bis 5, dadurch gekennzeichnet, daß das Zentrum (10) der Platinenabdeckung (5) aus einem in eine Ausstanzung der Platinenabdeckung eingesetzten Zuschnitt aus austenitischem Blech besteht, welches die gleiche Blechdicke aufweist wie die Platinenaodeckung (5).

8. Gar- und/oder Kochgerät nach einem der Ansprüche 1 bis 7, dadurch gekennzeichnet, daß in den Abdeckungsausnehmungen (7) der Platinenabdeckung (5) der Werkstoff der Wärmeverteilungsplatinen (4) freiliegt.

9. Gar- und/oder Kochgerät nach einem der Ansprüche 1 bis 7, dadurch gekennzeichnet, daß in die Abdeckungsausnehmungen (7) Zuschnitte aus austenitischem Blech eingelegt sind.

10. Verwendung eines Gar- und/oder Kochgerätes nach einem der Ansprüche 1 bis 7,

   10.1) auf Gar- und/oder Kochplatten für die Zuführung der Wärmeenergie durch Wärmeleitung, die eine metallische Aufsetzplatte oder eine Ceranaufsetzplatte für das Gar- und/oder Kochgerät aufweisen,

   10.2) auf Gar- und/oder Kochplatten für die Zuführung der Wärmeenergie durch elektromagnetische Induktion, die eine Induktionsspule in Form einer Schraubenwendel oder einer ebenen Spirale mit einer zur Achse des Gar- und/oder Kochgerätes parallelen Achse aufweisen, die hauptsächlich im Randbereich des mit zur Achse der Induktionsspule konzentrische Achse aufgesetzten Gar- und/oder Kochgerätes die induktive Erwärmung bewirkt,

wobei bei Verwendung gemäß 10.2) die Frequenz des elektromagnetischen Feldes im Bereich von $10^4$ Hz liegt.

**Claims**

1. A cooking vessel and/or saucepan, adapted to a supply of thermal energy at the base by thermal conduction or by electromagnetic induction, comprising

   a receptacle, which is circular in plan view, and which consists of austenitic steel sheet for the food, and having a receptacle shell and receptacle base,

   a heat distribution bedplate of predetermined thickness and consisting of a metal which is a good thermal conductor, said bedplate being fixed flat to the underside of the receptacle base,

   a ferro-magnetic bedplate cover having a steel sheet collar which bears against the receptacle between its base and its shell, the bedplate cover being fixed flat to the heat distribution bedplate,

   the bedplate cover having recesses and a cold-base geometry which, extending away from the support plane, is slightly concave to flat, characterised by the combination of the following features:

   1.1) the bedplate cover (5) of ferro-magnetic sheet metal has recesses (7) in the form of substantially radially extending slots,

   1.2) the radial cover recesses (7) radiate from a common centre (10),

   1.3) the radial cover recesses (7) have a length which terminates before the cover collar (6),

   the sandwich unit (3, 4, 5) consisting of the receptacle base (3), the heat distribution bedplate (4) and the bedplate cover (5) being constructed so as to be adequately bulge-stable where the thermal energy is supplied by thermal conduction, by adapting the thickness of the sheet metal of the receptacle base (3) and the thickness of the sheet metal of the bedplate cover (5), on the one hand, the length and the width of the cover recesses (7) and the diameter of the centre (10), on the other hand.

2. A cooking vessel and/or saucepan according to claim 1, characterised in that the component parts of the sandwich unit (3, 4, 5) are fixed flat to one another by intermetallic connections.

3. A cooking vessel and/or saucepan according to claim 1, characterised in that the component parts of the sandwich unit (3, 4, 5) are fixed flat to one another by soldered connections.

4. A cooking vessel and/or saucepan according to any one of claims 1 to 3, characterised in that the receptacle base (3) and hence the receptacle (1) have a total sheet-metal thickness in the range from 0.6 to 1.25 mm, the heat distribution bedplate (4) has a thickness in the range from 4 to 8 mm and the bedplate cover (5) has a sheet-metal thickness in the range from 0.5 to 0.8 mm.

5. A cooking vessel and/or saucepan according to any one of claims 1 to 4, characterised in that the sandwich unit (3, 4, 5) together with the cover collar (6) bearing against the receptacle (1) forms relative to the latter a peripheral annulus (11) in the form of a gusset in vertical section, into which annulus the material of the heat distribution bedplate (4) is introduced, namely intermetallically or connected by a soldered connection to the cover collar (6) and the receptacle (1), and in that this region of the sandwich unit (3, 4, 5) is adapted to be elastically deformable in response to thermal expansion.

6. A cooking vessel and/or saucepan according to any one of claims 1 to 5, characterised in that the centre (10) of the bedplate cover (5) is formed from the ferro-magnetic sheet metal of the bedplate cover (5).

7. A cooking vessel and/or saucepan according to any one of claims 1 to 5, characterised in that the centre (10) of the bedplate cover (5) consists of an austenitic sheet-metal blank inserted into a stamped-out part of the bedplate cover and having the same sheet-metal thickness as the bedplate cover (5).

8. A cooking vessel and/or saucepan according to any one of claims 1 to 7, characterised in that the material of the heat distribution bedplates (4) is exposed in the recesses (7) of the bedplate cover (5).

9. A cooking vessel and/or saucepan according to any one of claims 1 to 7, characterised in that austenitic sheet-metal blanks are inserted in the cover recesses (7).

10. Use of a cooking vessel and/or saucepan according to any one of claims 1 to 7,

10.1) on cooking and/or hot plates for the supply of thermal energy by conduction, said plates having a metallic supporting plate or a ceramic supporting plate for the cooking vessel and/or saucepan,

10.2) on cooking and/or hot plates for the supply of thermal energy by electromagnetic induction, said plates having an induction coil in the form of a helix or a flat spiral having an axis parallel to the axis of the cooking vessel and/or saucepan, said induction coil effecting inductive heating mainly in the edge zone of the cooking vessel and/or saucepan applied with its axis concentric to the axis of the induction coil,

wherein, in the use according to 10.2), the frequency of the electromagnetic field is in the range of $10^4$ Hz.

## Revendications

1. Ustensile de cuisson et/ou de braisage, conçu pour être alimenté par le fond en énergie thermique par conduction thermique ou par induction électromagnétique, comprenant

un récipient circulaire en projection horizontale, en tôle d'acier austénitique, destiné à recevoir la denrée à braiser et/ou à cuire et constitué d'une paroi de récipient et d'un fond de récipient,

une plaque de répartition de chaleur d'épaisseur prédéfinie fixée à plat sous le fond du récipient et réalisée dans un métal à bonne conduction thermique,

un revêtement de plaque ferromagnétique qui est muni d'un collet de revêtement en tôle d'acier appliqué contre le récipient dans la zone de transition entre le fond du récipient et la paroi du récipient et qui est fixé à plat contre la plaque de répartition de chaleur,

le revêtement de plaque comportant des évidements de revêtement et un fond dont la géométrie à froid est légèrement concave, par rapport au plan d'appui à plane, caractérisé par la combinaison des caractéristiques suivantes :

1.1) le revêtement de plaque (5) en tôle ferromagnétique possède des évidements de revêtement (7) en forme de fentes sensiblement radiales,

1.2) les évidements de revêtement radiaux (7) partent d'un centre commun (10),

1.3) les évidements de revêtement radiaux (7) possèdent une longueur qui se termine avant le collet de revêtement (6),

l'ensemble sandwich (3, 4, 5) constitué du fond de récipient (3), de la plaque de répartition de chaleur (4) et du revêtement de plaque (5) étant rendu suffisamment stable au bombement, lors de l'apport d'énergie thermique par conduction thermique, par un choix approprié, d'une part, de l'épaisseur de la tôle du fond de récipient (3) par rapport à celle de la tôle du revêtement de plaque (5) et, d'autre part, de la longueur des évidements de revêtement (7) par rapport à leur largeur ainsi que par rapport au diamètre du centre (10).

2. Ustensile de cuisson et/ou de braisage selon la revendication 1, caractérisé en ce que les composants de l'ensemble sandwich (3, 4, 5) sont fixés à plat les uns contre les autres par des liaisons intermétalliques.

3. Ustensile de cuisson et/ou de braisage selon la revendication 1, caractérisé en ce que les composants de l'ensemble sandwich (3, 4, 5) sont fixés à plat les uns contre les autres par des liaisons brasées.

4. Ustensile de cuisson et/ou de braisage selon l'une des revendications 1 à 3, caractérisé en ce que le fond de récipient (3) et donc le récipient (1) présentent une épaisseur de tôle totale comprise entre 0,6 et 1,25 mm, la plaque de répartition de chaleur (4) une épaisseur comprise entre 4 et 8 mm, et le revêtement de plaque (5) une épaisseur de tôle comprise entre 0,5 et 0,8 mm.

5. Ustensile de cuisson et/ou de braisage selon l'une des revendications 1 à 4, caractérisé en ce que, par rapport au récipient (1), l'ensemble sandwich (3, 4, 5) forme, avec le collet de revêtement (6) appliqué contre le récipient (1), un espace annulaire périphérique (11) dont la section verticale a la forme d'un coin et dans lequel le matériau de la plaque de répartition de chaleur (4) est introduit et, plus précisément, relié au collet de revêtement (6) et au récipient (1) par voie intermétallique ou par une liaison brasée, et en ce que cette zone de l'ensemble sandwich (3, 4, 5) est prévue pour se déformer élastiquement à la dilatation thermique.

6. Ustensile de cuisson et/ou de braisage selon l'une des revendications 1 à 5, caractérisé en ce que le centre (10) du revêtement de plaque (5) est réalisé dans la tôle ferromagnétique du revêtement de plaque (5).

7. Ustensile de cuisson et/ou de braisage selon l'une des revendications 1 à 5, caractérisé en ce que le centre (10) du revêtement de plaque (5) est constitué d'une pièce découpée dans une tôle austénitique possédant la même épaisseur que le revêtement de plaque (5) et insérée dans une découpe du revêtement de plaque.

8. Ustensile de cuisson et/ou de braisage selon l'une des revendications 1 à 7, caractérisé en ce que le matériau de la plaque de répartition de chaleur (4) est exposé dans les évidements de revêtement (7) du revêtement de plaque (5).

9. Ustensile de cuisson et/ou de braisage selon l'une des revendications 1 à 7, caractérisé en ce que des pièces découpées dans de la tôle austénitique sont insérées dans les évidements de revêtement (7).

10. Utilisation d'un ustensile de cuisson et/ou de braisage selon l'une des revendications 1 à 7,

10.1) sur des plaques de cuisson ou de braisage qui l'alimentent en énergie thermique par conduction thermique et qui comportent une plaque métallique rapportée ou une plaque céramique rapportée pour l'ustensile de cuisson et/ou de braisage,

10.2) sur des plaques de cuisson ou de braisage qui l'alimentent en énergie thermique par induction électromagnétique et qui comportent une bobine d'induction en forme d'enroulement spiralé ou de spirale plane qui possède un axe parallèle à l'axe de l'ustensile de cuisson et/ou de braisage et qui provoque l'échauffement inductif principalement dans la zone de bord de l'ustensile de cuisson et/ou de braisage lorsque son axe est placé concentriquement à celui de la bobine d'induction,

la fréquence du champ électromagnétique étant, de l'ordre de $10^4$ Hz en cas d'utilisation selon 10.2).

Fig. 1

Fig. 2

Fig.3

Fig.4

Fig.5

Fig.6

Fig.7

Fig.8